# EUROPÄISCHE PATENTANMELDUNG

(11) **EP 2 803 254 A1**
(43) Veröffentlichungstag der Anmeldung: **19.11.2014**
(21) Anmeldenummer: 14155117.6
(22) Anmeldetag: 14.02.2014
(51) Int. Cl.: A01B 63/00

(54) **Kontrollsystem für Anbaugeräte einer landwirtschaftlichen Arbeitsmaschine**

(30) Priorität: 16.05.2013 DE 102013008338
(71) Anmelder: CLAAS Selbstfahrende Erntemaschinen GmbH, 33428 Harsewinkel (DE)
(72) Erfinder: Brill, Volker, 33758 Schloß-Holte (DE); Eggenhaus, Georg, 48369 Saerbeck (DE); Grevinga, Markus, 48369 Saerbeck (DE); Jeppe, Eckehardt, 34289 Zierenberg (DE); Klüber, Victor, 33378 Rheda-Wiedenbrück (DE); Losch, Michael, 33775 Versmold (DE)

(57) **Zusammenfassung**

Die Erfindung betrifft ein Kontrollsystem für Anbaugeräte (1a-f) einer landwirtschaftlichen Arbeitsmaschine (2) mit einer Geräteschnittstelle (3) zur Ansteuerung von Maschinenanschlüssen (4a-j) der landwirtschaftlichen Arbeitsmaschine (2), einem Datenspeicher (5) mit Belegungstabellen (6a-c), wobei jeder Belegungstabelle (6a-c) ein oder mehrere Anbaugerätemodelle (7a-f) zugeordnet sind, wobei jedes Anbaugerätemodell (7a-f) ein Anbaugerät (1a-f) mit Gegenanschlüssen definiert und jede Belegungstabelle (6a-c) eine Zuweisung von Maschinenanschlüssen (4a-j) der landwirtschaftlichen Arbeitsmaschine (2) an die Gegenanschlüsse der der Belegungstabelle (6a-c) zugeordneten Anbaugerätemodelle (7a-f) umfasst, einer Steuervorrichtung (8), welche dazu eingerichtet ist, die Maschinenanschlüsse (4a-j) der landwirtschaftlichen Arbeitsmaschine (2) gemäß einer aktiven Belegungstabelle (9) des Datenspeichers (5) anzusteuern und einer Eingabeschnittstelle (10) zur Bearbeitung der Belegungstabellen (6a-c) des Datenspeichers (5) und zum Bestimmen der aktiven Belegungstabelle (9). Die Erfindung betrifft ferner ein Verfahren zum Erzeugen eines Belegungsschemas für ein solches Kontrollsystem.

## Beschreibung

Die Erfindung betrifft ein Kontrollsystem für Anbaugeräte einer landwirtschaftlichen Arbeitsmaschine mit den Merkmalen des Anspruchs 1 und ein Verfahren zum Erzeugen eines Bele-gungsschemas für ein Kontrollsystem mit den Merkmalen des Anspruchs 15.

In der Landwirtschaft werden heutzutage regelmäßig Anbaugeräte eingesetzt, welche je nach Anwendungsfall einzeln oder in Kombination mit anderen Anbaugeräten an eine landwirtschaftliche Arbeitsmaschine wie einen Schlepper, einen Traktor oder ein sonstiges Fahrzeug angekoppelt werden. Die landwirtschaftliche Arbeitsmaschine - nachfolgend auch nur als "Arbeitsmaschine" bezeichnet - weist dabei eine Reihe von Maschinenanschlüssen auf, die je nach Anwendungsfall elektrische, pneumatische oder hydraulische Anschlüsse umfassen.

Zur Realisierung der hydraulischen Anschlüsse steht an der Arbeitsmaschine regelmäßig eine Ventilinsel mit mehreren Ventilscheiben zur Verfügung, die separat ansteuerbar sind, so dass den angekoppelten Anbaugeräten gezielt die für den Betrieb erforderliche Hydraulik zur Verfügung gestellt werden kann. Die einzusetzenden Anbaugeräte werden dabei über Schläuche an die Ventilscheiben gekoppelt. Im Betrieb werden die Anbaugeräte dann regelmäßig von einer zentralen Elektronik in der Arbeitsmaschine dadurch angesteuert, dass die gekoppelten Ventilscheiben mit gewünschten Drücken beaufschlagt werden. Insbesondere werden vorgeplante Sequenzen entsprechender Verläufe, welche sich auch auf die Elektrik beziehen können, ausgeführt.

Zum korrekten Ansteuern des Anbaugeräts muss bekannt sein, an welchem Maschinenanschluss der Arbeitsmaschine welches Anbaugerät gekoppelt ist. Sinnvoll ist außerdem, dass, wenn eine bestimmte Konfiguration von Anbaugeräten abmontiert und nach einiger Zeit wieder an die Arbeitsmaschine gekoppelt wird, dieselbe Zuordnung der Maschinenanschlüsse der Arbeitsmaschine zu den Anbaugeräten wie vorher wiederhergestellt werden kann, damit die Ansteuerung und speziell die Sequenzen so wie beim letzten Mal ausgeführt werden können.

Es liegt auf der Hand, dass mit zunehmender Zahl von Anbaugeräten und unterschiedlichen Kombinationen von Anbaugeräten ein Wiederankoppeln nach der Erinnerung des Benutzers fehlerbehaftet und mühsam wird. Da speziell den Ventilscheiben arbeitsmaschinenseitig regelmäßig Farbcodes zugeordnet sind, wird sich bisher oft damit beholfen, dass entsprechende Farbmarkierungen von dem jeweiligen Bediener auch an die Gegenanschlüsse der Anbaugeräte angebracht werden. Dieses System stößt insbesondere dann an seine Grenzen, wenn einzelne oder alle Anbaugeräte je nach Kombination mit unterschiedlichen Maschinenanschlüssen der Arbeitsmaschine kombiniert werden müssen. Insgesamt sind damit der Bedienkomfort einerseits und die Einsatzflexibilität andererseits gering.

Aus dem Stand der Technik ist es ferner bekannt (EP 2 018 981 B1), an den Ventilanschlüssen der Anbaugeräte Transponder vorzusehen, welche von einer Anschlusspositionserfassungsvorrichtung eines Schleppers identifiziert werden und auf deren Basis ein Überblick über die Anschlussposition der Anbaugeräte erstellt und an die Prozessrechner auf den Anbaugeräten übermittelt wird. Die Prozessrechner auf den Anbaugeräten steuern nun das Steuergerät auf dem Schlepper jeweils so an, dass gemäß der Funktionsweise des Anbaugeräts die Ventilscheiben geeignet angesteuert werden.

Der Bedienkomfort bei dem letztgenannten, bekannten System ist zwar hoch. Nachteilig ist allerdings die Tatsache, dass die Kommunikation mit den obigen Transpondern aufgrund der oft rauhen landwirtschaftlichen Einsatzumgebung nicht immer sichergestellt werden kann. Hinzu kommt, dass der Kommunikationspfad zwischen den Prozessrechnern der Anbaugeräte und dem schlepperseitigen Steuergerät eine zusätzliche Fehlerquelle darstellt. Das System ist im Ergebnis aufwendig und nur wenig robust.

Die Aufgabe der Erfindung besteht daher darin, ein Kontrollsystem für Anbaugeräte einer landwirtschaftlichen Arbeitsmaschine so weiterzuentwickeln, dass mit einfachen Mitteln eine hohe Robustheit bei gleichzeitig hohem Bedienkomfort und hoher Einsatzflexibilität erreichbar sind.

Diese Aufgabe wird bezogen auf ein Kontrollsystem für Anbaugeräte einer landwirtschaftlichen Arbeitsmaschine durch die Merkmale des Anspruchs 1 und bezogen auf ein Verfahren zum Erzeugen eines Belegungsschemas für ein Kontrollsystem durch die Merkmale des Anspruchs 15 gelöst.

Wesentlich für die Erfindung ist die Erkenntnis, dass durch die Verwendung einer Belegungstabelle als Datenstruktur eine größtmögliche Flexibilität bei der Kopplung von Anbaugeräten an die landwirtschaftliche Arbeitsmaschine gegeben ist und auf diese Weise sowohl bekannte Konfigurationen wiederhergestellt als auch auf geänderte Konfigurationen flexibel reagiert werden kann. Ein solcher Ansatz hat den Vorteil, dass er zwar externe Hilfsmittel wie etwa Transponder o. dgl. mit benutzen kann, auf diese aber nicht angewiesen ist, sondern auch für den einfachen Fall einer manuellen Kopplung der Anschlüsse eine große Hilfestellung bietet. Die Vorteile ergeben sich also nicht nur bei einer bestimmten Art und Weise der Verwaltung, sondern können bei verschiedenen Methoden, welche sowohl hohe als auch sehr niedrige Automatisierungsgrade umfassen, eingesetzt werden.

Allen obigen Ansätzen gemeinsam ist die vorschlagsgemäße Belegungstabelle, wobei dieser Belegungstabelle ein oder mehrere Anbaugerätemodelle zugeordnet sind, wobei jedes Anbaugerätemodell ein Anbaugerät mit Gegenanschlüssen definiert und die Belegungstabelle eine Zuweisung von Maschinenanschlüssen der landwirtschaftlichen Arbeitsmaschine an die Gegenanschlüsse der der Belegungstabelle zugeordneten Anbaugerätemodelle umfasst. Es handelt sich also bei der Belegungstabelle um eine Zuordnungstabelle, welche einerseits von den bekannten Maschinenanschlüssen der landwirtschaftlichen Arbeitsmaschine und andererseits den aus den Anbaugerätemodellen bekannten Gegenanschlüssen der entsprechenden Anbaugeräte ausgeht und eine eindeutige Zuordnung zwischen diesen beiden definiert.

Eindeutig in diesem Sinne heißt, dass zwar nicht jeder Maschinenanschluss der landwirtschaftlichen Arbeitsmaschine einem Gegenanschluss zugewiesen sein muss, da es regelmäßig sein kann, dass nicht alle Maschinenanschlüsse der Arbeitsmaschine durch die Anbaugeräte verwendet werden, dass aber umgekehrt jedem Gegenanschluss eines gekoppelten Anbaugeräts ein Maschinenanschluss zugewiesen ist und kein Maschinenanschluss der landwirtschaftlichen Arbeitsmaschine zwei Gegenanschlüssen zugewiesen ist. Es definiert also eine solche Belegungstabelle eine Verbindungskonfiguration zwischen einer Menge von Anbaugeräten bzw. ihren Gegenanschlüssen und den Maschinenanschlüssen der landwirtschaftlichen Arbeitsmaschine, welche keinen Widerspruch oder Konflikt aufweist und auf welcher Basis ein Ansteuern der Anbaugeräte, insbesondere das Ausführen von Sequenzen durchgeführt werden kann, da die Belegungstabelle Auskunft darüber gibt, welche tatsächlichen Maschinenanschlüsse mit welchen Gegenanschlüssen der Anbaugeräte gekoppelt wurden.

Die bevorzugte Ausführung gemäß dem Anspruch 2 sieht nun vor, dass eine solche Belegungstabelle an eine Mobilvorrichtung übertragen wird. Damit könnte etwa ein außerhalb der Fahrerkabine der landwirtschaftlichen Arbeitsmaschine stehender Bediener auf einem Smartphone oder einem ähnlichen Gerät eine abgespeicherte Belegungstabelle aufrufen und die Kopplung zwischen den Maschinenanschlüssen und den Gegenanschlüssen entsprechend dieser Belegungstabelle vornehmen. Es entfällt die Notwendigkeit, sich diese Belegung zu merken oder aber mit Farbmarkierungen o. dgl. als Erinnerungsstütze zu arbeiten.

Im Anspruch 3 wird präzisiert, dass es sich bei den Maschinenanschlüssen um Hydraulikanschlüsse, Pneumatikanschlüsse, Elektroanschlüsse und/oder Kommunikationsanschlüsse handeln kann. Die Belegungstabelle kann also bei einer Vielzahl von zuzuordnenden Leitungstypen unterstützen.

Die bevorzugte Ausführungsform des Anspruchs 4 sieht nun vor, dass bei Eingabe einer Kombination von Anbaugeräten automatisch aus in einem Speicher abgelegten Belegungstabellen diejenige Belegungstabelle ermittelt wird, welche die Kopplung speziell dieser Anbaugeräte vorsieht. Der Bediener kann also nach der geeigneten Belegungstabelle in der Art suchen, dass er die gewünschten Anbaugeräte angibt und daraufhin eine bereits bestimmte Belegungstabelle erhält.

Die bevorzugten Ausführungsformen der Ansprüche 5 bis 7 bieten nun die Möglichkeit, bereits bekannte Belegungstabellen so weiterzuentwickeln, dass zusätzliche Anbaugeräte der jeweiligen Kombination hinzugefügt werden können und ihren Gegenanschlüssen sogleich Maschinenanschlüsse zugewiesen werden, sofern dies möglich ist. Dabei wird berücksichtigt, dass bei Hinzufügen eines zusätzlichen Anbaugeräts an eine vorhandene Belegungstabelle auch daraufhin geprüft werden kann, ob eine Belegungstabelle einschließlich des zu ergänzenden Anbaugeräts eventuell schon im Datenspeicher vorhanden ist und somit einfach auf diese zugegriffen werden kann.

Der Gegenstand des Anspruchs 8 weist auf die Möglichkeit hin, dass die Zuweisung der Maschinenanschlüsse an die Gegenanschlüsse eines Anbaugeräts beim Hinzufügen entweder durch den Bediener vorgegeben oder automatisch von der Steuervorrichtung erzeugt werden kann.

Die Ansprüche 9 bis 12 wiederum beziehen sich auf die Ausführung von Sequenzen, welche landwirtschaftliche Prozessschritte definieren und zwar durch zeit- oder ereignisabhängige Leistungsverläufe an den Gegenanschlüssen der betroffenen Anbaugeräte. Diese Sequenzen können von der Steuervorrichtung ebenfalls gespeichert, verwaltet, bearbeitet und ausgeführt werden. Jede Sequenz benötigt ein oder mehrere Anbaugeräte, welche ihr zugeordnet sind.

Der Anspruch 9 sieht speziell vor, dass basierend auf der Belegungstabelle geprüft wird, ob die erforderlichen Anbaugeräte für eine bestimmte Sequenz gekoppelt sind.

Umgekehrt kann gemäß dem Anspruch 11 auch vorgesehen sein, dass die Steuervorrichtung bei Auswahl einer gewünschten Sequenz eine Belegungstabelle erstellt, diese Belegungstabelle also entweder vorgibt, damit eine entsprechende Kopplung stattfindet oder basierend auf einer schon vorgenommenen Kopplung, diese Vorgabe bei der Erstellung der Belegungstabelle berücksichtigt.

Schließlich sieht der Anspruch 12 vor, bei Auswahl einer Sequenz die entsprechend vorgeschlagene Belegungstabelle ebenfalls an ein Mobilgerät zu übertragen, so dass der Bediener die entsprechende Kopplung vornehmen kann.

Ein vereinfachtes System zur Verwaltung der Belegungstabellen bietet das Verfahren nach Anspruch 15. Auch wenn regelmäßig in einem Betrieb eine große Vielzahl von Anbaugeräten für eine Arbeitsmaschine vorhanden ist, welche grundsätzlich fast beliebig mit der landwirtschaftlichen Arbeitsmaschine gekoppelt werden könnten, so werden in der Praxis doch nur bestimmte sinnvolle Kombinationen von Anbaugeräten an einer Arbeitsmaschine verwendet, da bestimmte Anbaugeräte für sich wechselseitig ausschließende Anwendungsfälle vorgesehen sind.

Wenn nun alle in der Praxis vorkommenden Kombinationen von Anbaugeräten im Voraus bekannt sind, dann ist es sehr gut möglich, dass eine Zuordnung zwischen den Gegenanschlüssen der Anbaugeräte und den Maschinenanschlüssen der landwirtschaftlichen Arbeitsmaschine existiert, bei der jeder Gegenanschluss eines Anbaugeräts immer nur an denselben Maschinenanschluss der landwirtschaftlichen Arbeitsmaschine gekoppelt wird. Ein Umstecken ist dann also nur notwendig, wenn das Anbaugerät ganz von der landwirtschaftlichen Arbeitsmaschine getrennt wird und Konflikte um einen Maschinenanschluss der landwirtschaftlichen Arbeitsmaschine bei einer vorbekannten Kombination werden ausgeschlossen. Das vorschlagsgemäße Verfahren erzeugt nun ein Belegungsschema, welches für jedes Anbaugerät eine feste Zuordnung der Maschinenanschlüsse an seine Gegenanschlüsse vorsieht, was etwa durch eine entsprechende Farbmarkierung der Gegenanschlüsse berücksichtigt werden kann, bei der aber im Voraus bekannt ist, dass sie nicht mehr geändert werden muss. Dann kann jedweder Umbau von Kombinationen der Anbaugeräte einfach auf diesen markierten Zuordnungen basieren, da im Voraus alle Konflikte vermieden wurden. Eine nachgelagerte Kontrolle oder Abfrage ist nicht mehr notwendig.

In der lediglich Ausführungsbeispiele wiedergebenden Zeichnung zeigt
- Fig. 1: eine landwirtschaftliche Arbeitsmaschine mit einem vorschlagsgemäßen Kontrollsystem und gekoppelten Anbaugeräten,
- Fig. 2: eine beispielhafte Belegungstabelle für ein vorschlagsgemäßes Kontrollsystem,
- Fig. 3: landwirtschaftliche Prozessschritte definierende Sequenzen zur Ausführung durch ein vorschlagsgemäßes Kontrollsystem,
- Fig. 4a)-c): eine Reihe von Kombinationen von Anbaugeräten mit einer landwirtschaftlichen Maschine mit einem vorschlagsgemäßen Kontrollsystem und
- Fig. 5a-c): Belegungstabellen eines Belegungsschemas basierend auf den Kombinationen der Anbaugeräte mit der landwirtschaftlichen Arbeitsmaschine gemäß den Fig. 4a)-c).

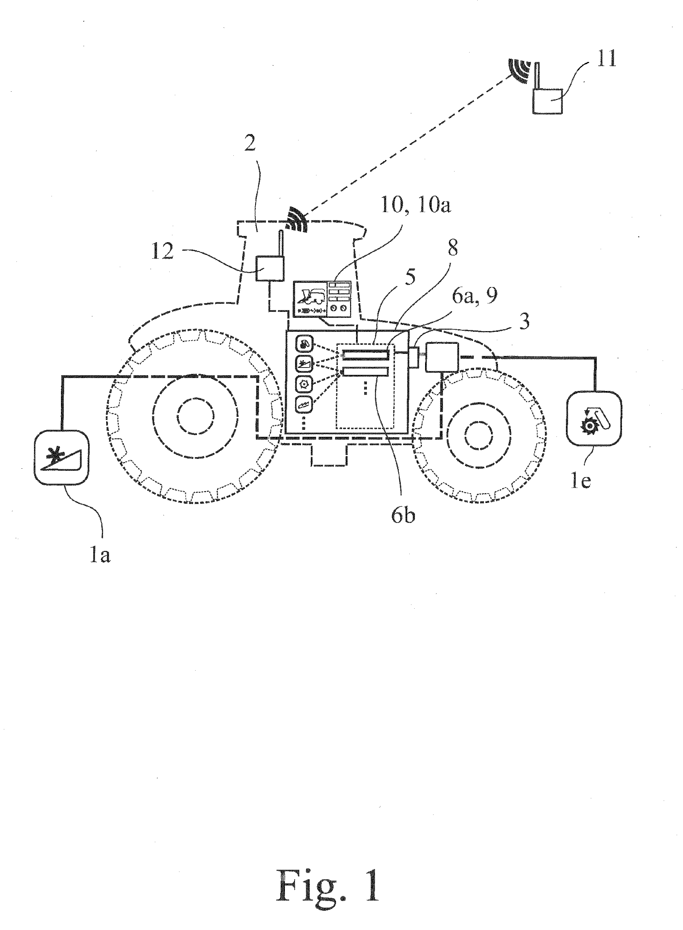

In der Fig. 1 ist ein vorschlagsgemäßes Kontrollsystem für Anbaugeräte 1a-f einer landwirtschaftlichen Arbeitsmaschine 2 dargestellt. Das Kontrollsystem weist eine Geräteschnittstelle 3 zur Ansteuerung von - in der Fig. 1 nicht einzeln dargestellten - Maschinenanschlüssen 4a-j der landwirtschaftlichen Arbeitsmaschine 2 und einen Datenspeicher 5 mit Belegungstabellen 6a,b auf, wobei jeder Belegungstabelle 6a,b ein oder mehrere Anbaugerätemodelle 7a-f zugeordnet sind, wobei jedes Anbaugerätemodell 7a-f ein Anbaugerät 1a-f mit Gegenanschlüssen definiert und jede Belegungstabelle 6a,b eine Zuweisung von Maschinenanschlüssen 4a-j der landwirtschaftlichen Arbeitsmaschine 2 an die Gegenanschlüsse der der Belegungstabelle 6a,b zugeordneten Anbaugerätemodelle 7a-f umfasst.

Der Datenspeicher 5 sowie die Belegungstabelle 6a,b und die Anbaugerätemodelle 7a-f sind als Datenstrukturen zu verstehen und dementsprechend grundsätzlich in Software abbildbar. Gleiches gilt für die Zuweisung der Maschinenanschlüsse 4a-j an die Gegenanschlüsse. Die genauen Ausgestaltungen dieser Datenstrukturen und ihrer Formate sind grundsätzlich beliebig. Das vorschlagsgemäße Kontrollsystem umfasst ferner eine Steuervorrichtung 8 - welche auch, wie in der Fig. 1 dargestellt, den Datenspeicher 5 umfassen kann -, die dazu eingerichtet ist, die Maschinenanschlüsse 4a-j der landwirtschaftlichen Arbeitsmaschine 2 gemäß einer aktiven Belegungstabelle 9 des Datenspeichers 5 anzusteuern. Bei einer solchen Steuervorrichtung 8 kann es sich um eine beliebige elektronische Vorrichtung wie z. B. eine Steuerelektronik handeln. Die Steuervorrichtung 8 kann auch aus mehreren einzelnen, miteinander in Verbindung stehenden Einzelkomponenten bestehen.

Das vorschlagsgemäße Kontrollsystem weist ferner eine Eingabeschnittstelle 10 zur Bearbeitung der Belegungstabellen 6a,b des Datenspeichers 5 und zum Bestimmen der aktiven Belegungstabelle 9 auf. Bei dieser Eingabeschnittstelle 10 kann es sich sowohl um eine reine Datenschnittstelle, welche auch nur softwaremäßig implementiert sein kann, handeln, als auch um ein physikalisches Eingabemittel, welches Teil desselben Gerätes wie die Steuervorrichtung 8 ist oder aber auch getrennt zur Steuervorrichtung 8 ausgeführt ist und mit diesem nur nachrichtentechnisch in Verbindung steht. Wie in der Fig. 1 dargestellt, kann es sich bei der Eingabeschnittstelle 10 um einen Berührungsbildschirm 10a handeln.

Vorliegend ist unter der aktiven Belegungstabelle 9 diejenige Belegungstabelle 6a,b zu verstehen, gemäß welcher aktuell eine Ansteuerung der Leistungsanschlüsse 4a-j der landwirtschaftlichen Arbeitsmaschine 2 durch die Steuervorrichtung 8 erfolgt.

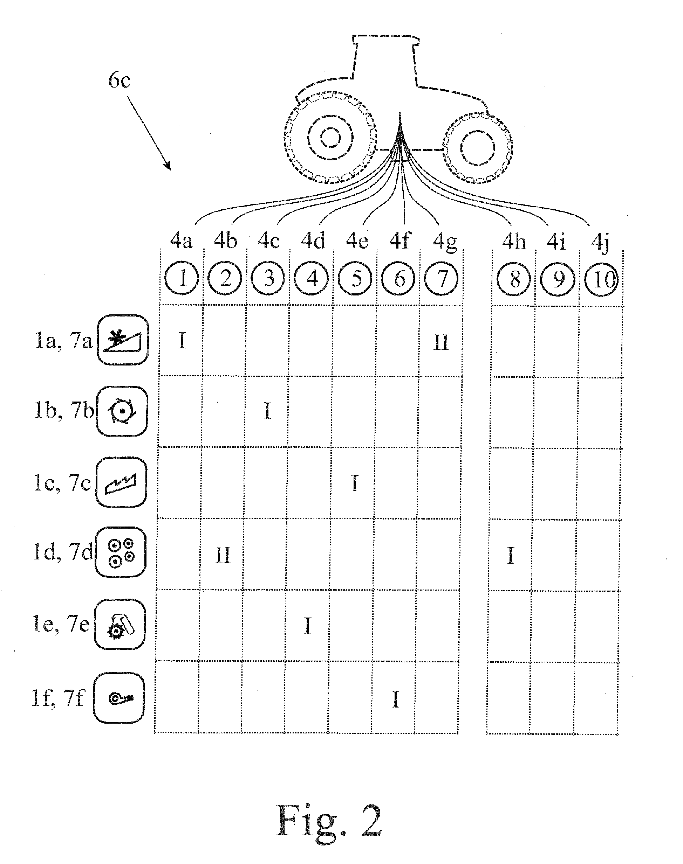

Die Fig. 2 zeigt nun eine solche beispielhafte Belegungstabelle 6c in Gestalt einer Matrix. Eine römische Ziffer in einem Tabellenfeld der Belegungstabelle 6c entspricht dabei der Zuweisung desjenigen Maschinenanschlusses 4a-j der landwirtschaftlichen Arbeitsmaschine 2, in deren Spalte die betreffende römische Ziffer steht, an den Gegenanschluss des Anbaugeräts 1a-f, in deren Zeile sich das Tabellenfeldes befindet. Genauer gesprochen ist derjenigen Zeile das jeweilige Anbaugerätemodell 7a-f des Anbaugeräts 1a-f zugeordnet, wobei in der Zeichnung jedoch zwecks Klarheit Anbaugerät 1a-f und Anbaugerätemodell 7a-f grafisch identisch dargestellt werden.

Die römische Ziffer selbst wiederum gibt die Nummer des Gegenanschlusses des jeweiligen Anbaugeräts 1a-f an, welcher der besagte Maschinenanschluss 4a-f zugewiesen ist. Aus der Belegungstabelle 6c folgt also, dass das erste Anbaugerät 1a zwei Gegenanschlüsse aufweist, von denen dem ersten der erste Maschinenanschluss 4a und dem zweiten der siebte Maschinenanschluss 4g der landwirtschaftlichen Arbeitsmaschine 2 zugewiesen wurde. Das zweite Anbaugerät 1b weist nur einen Gegenanschluss auf, dem der dritte Maschinenanschluss 4c der landwirtschaftlichen Arbeitsmaschine 2 zugewiesen wurde. Das vierte Anbaugerät 1b weist wiederum zwei Gegenanschlüsse auf, von denen dem ersten der achte Maschinenanschluss 4h und dem zweiten der zweite Maschinenanschluss 4b der landwirtschaftlichen Arbeitsmaschine 2 zugewiesen wurde. Schließlich weisen das fünfte und das sechste Anbaugerät 1e und 1f nur jeweils einen Gegenanschluss auf, denen der vierte Maschinenanschluss 4d bzw. der sechste Maschinenanschluss 4f der landwirtschaftlichen Arbeitsmaschine 2 zugewiesen wurde.

Im Ergebnis ist erkennbar, dass bei dieser Belegungstabelle 6c jedem Gegenanschluss der Anbaugeräte 1a-f genau einer der ersten acht Maschinenanschlüsse 4a-h der landwirtschaftlichen Arbeitsmaschine 2 zugewiesen wurde. Daneben gibt es noch die Maschinenanschlüsse 4i,j der landwirtschaftlichen Arbeitsmaschine 2, welche nicht verwendet werden, weil sie für diese Kombination von Anbaugeräten 1a-f nicht erforderlich sind und deswegen nicht zugewiesen wurden, hier also der neunte und der zehnte Maschinenanschluss 4i und 4j.

Bevorzugt ist nun, dass die Steuervorrichtung 8 dazu eingerichtet ist eine Belegungstabelle 6a-c - vorzugsweise die aktive Belegungstabelle 9 - an eine Mobilvorrichtung 11 zu übertragen. Dies kann bevorzugt über eine drahtlose Kommunikationsschnittstelle 12 geschehen und insbesondere bei Bestimmen der aktiven Belegungstabelle 9 erfolgen.

Vorzugsweise umfassen die Maschinenanschlüsse 4a-j Hydraulikanschlüsse und/oder Pneumatikanschlüsse und/oder Elektroanschlüsse und/oder Kommunikationsanschlüsse. Insbesondere können sie Hydraulikanschlüsse sein, also nur diese umfassen. Im vorliegenden Beispiel der Fig. 2 handelt es sich bei den ersten sieben Maschinenanschlüssen 4a-g um Hydraulikanschlüsse. Bei dem achten Maschinenanschluss 4h handelt es sich um einen Pneumatikanschluss, bei dem neunten Maschinenanschluss 4i um einen Elektroanschluss und bei dem zehnten Maschinenanschluss 4j um einen Kommunikationsanschluss. Unter einem Kommunikationsanschluss wäre etwa ein Anschluss für ein Kommunikationsmedium wie etwa einem ISOBUS zu verstehen. ISOBUS bezeichnet hier einen Datenbus, welcher zur Norm ISO 11783 konform ist.

Es ist zu betonen, dass grundsätzlich im Sinne des Vorschlags ein einzelner Maschinenanschluss 4a-j - und folglich auch ein Gegenanschluss - mehr als eine physikalische Anschlussleitung umfassen kann. Speziell bei Ventilscheiben für Hydraulikanschlüsse umfasst eine einzelne Ventilscheibe ein Plus-Ventil und ein Minus-Ventil. Da diese beiden einzelnen Ventile aber immer nur paarweise mit dem Gegenpaar des jeweiligen Gegenanschlusses gekoppelt werden, sind sie als einzelner Maschinenanschluss 4a-j im Sinne des Vorschlags zu begreifen. Das würde ebenso für Anschlusstypen gelten, welche womöglich auch mehr als zwei physikalische Leitungen immer nur gruppenweise koppeln lassen.

Es ist auch bevorzugt, dass die Steuervorrichtung 8 dazu eingerichtet ist, bei Eingabe einer Kombination von Anbaugeräten 1a-f eine Belegungstabelle 6a-c aus dem Datenspeicher 5 zu ermitteln, welcher diejenigen Anbaugerätemodelle 7a-f zugeordnet sind, die die Anbaugeräte 1a-f der Kombination definieren. Diese Eingabe kann etwa durch die Eingabeschnittstelle 10 erfolgen. Es wird dem Bediener also die Möglichkeit gegeben, eine spezielle Kombination von Anbaugeräten 1a-f in die Steuervorrichtung 8 einzugeben und daraufhin die Steuervorrichtung 8 gleich die passende, im Datenspeicher 5 schon vorhandene Belegungstabelle 6a-c aus dem Datenspeicher 5 ermitteln zu lassen. Wenn diese Belegungstabelle 6a-c nun auch angezeigt wird, kann der Bediener einfach die Kopplung der Anbaugeräte 1a-f an die landwirtschaftliche Arbeitsmaschine 2 gemäß der Belegungstabelle 6a-c vornehmen. Diese kann dann durch die Steuervorrichtung 8 für die Ansteuerung einfach weiter verwendet werden. Besonders bevorzugt ist dementsprechend, dass diese ermittelte Belegungstabelle 6a-c sogleich als aktive Belegungstabelle 9 bestimmt wird.

Vorteilhaft kann sein, dass die Steuervorrichtung 8 dazu eingerichtet ist, bei Eingabe eines zusätzlichen Anbaugerätes 1a-f als Ergänzung zu einer Basis-Belegungstabelle zu prüfen, ob der Basis-Belegungstabelle Zuweisungen von Maschinenanschlüssen 4a-j der landwirtschaftlichen Arbeitsmaschine 2 an die Gegenanschlüsse desjenigen Anbaugerätemodells 7a-f hinzugefügt werden können, welches das zusätzliche Anbaugerät 1a-f definiert. Damit ist das Szenario betroffen, bei dem der Bediener zu einer bereits vorhandenen Kombination von Anbaugeräten 1a-f, welche mit der landwirtschaftlichen Arbeitsmaschine 2 gekoppelt sind, ein weiteres Anbaugerät 1a-f hinzufügen möchte. Dabei ist grundsätzlich zu prüfen, ob überhaupt noch Maschinenanschlüsse 4a-j belegbar bzw. zuweisbar sind, um das zusätzliche Anbaugerät 1a-f koppeln zu können. Die Steuervorrichtung 8 kann diese Information basierend auf dem bekannten Anbaugerätemodell 7a-f des zusätzlich gewünschten Anbaugeräts 1a-f sowie auf der Basis-Belegungstabelle ermitteln. Wenn etwa die Kopplung eines zusätzlichen Anbaugeräts 1a-f gemäß der Basis-Belegungstabelle nicht möglich ist, so kann dies dadurch gelöst werden, dass die Notwendigkeit, eines der gekoppelten Anbaugeräte 1a-f vorher zu trennen, von der Steuervorrichtung 8 angezeigt wird.

Aufbauend auf diese Prüfung kann die Steuervorrichtung 8 weiter dazu eingerichtet sein, bei Eingabe eines zusätzlichen Anbaugeräts 1a-f als Ergänzung zu einer Basis-Belegungstabelle zu prüfen, ob der Datenspeicher 5 eine Belegungstabelle 6a-c umfasst, welcher die Anbaugerätemodelle 7a-f der Basis-Belegungstabelle zugeordnet sind ein Anbaugerätemodell 7a-f zugeordnet ist, welches das zusätzliche Anbaugerät 1a-f definiert. Es wird also nicht nur, wie bereits in einer obenstehend beschriebenen bevorzugten Ausführungsform für die Neueingabe einer Kombination von Anbaugeräten 1a-f dargestellt, sondern auch bei der Ergänzung eines weiteren Anbaugeräts 1a-f zu einer bereits vorhandenen Kombination von Anbaugeräten 1a-f geprüft, ob sich für diese sich neu ergebende Kombination eine Belegungstabelle 6a-c im Datenspeicher 5 findet, welche Belegungstabelle 6a-c dann wiederum als Grundlage für die weitere Bearbeitung dienen kann. Bevorzugt ist wiederum, dass eine auf diese Weise ermittelte Belegungstabelle 6a-c als aktive Belegungstabelle 9 von der Steuervorrichtung 8 bestimmt wird.

Alternativ oder zusätzlich hierzu kann vorgesehen sein, dass die Steuervorrichtung 8 dazu eingerichtet ist, bei Eingabe eines zusätzlichen Anbaugeräts 1a-f als Ergänzung zu einer Basis-Belegungstabelle, der Basis-Belegungstabelle ein zusätzliches Anbaugerätemodell 7a-f zuzuordnen, welches das zusätzliche Anbaugerät 1a-f definiert, sowie Zuweisungen von Maschinenanschlüssen 4a-j der landwirtschaftlichen Arbeitsmaschine 2 an die Gegenanschlüsse dieses Anbaugerätemodelles 7a-f hinzuzufügen. Dies ist besonders für den Fall interessant, dass sich für diese durch die Eingabe des zusätzlichen Anbaugeräts 1a-f ergebende Kombination keine entsprechende Belegungstabelle 6a-c im Datenspeicher 5 findet, sondern eine solche Belegungstabelle dann ad hoc neu erstellt werden muss.

Bevorzugte Weiterbildungen hierfür sehen vor, dass nach einer ersten Möglichkeit die Zuweisungen der Maschinenanschlüsse 4a-j der landwirtschaftlichen Arbeitsmaschine 2 an die Gegenanschlüsse dieses zusätzlichen Anbaugerätemodells 1a-f von der Steuervorrichtung 8 bestimmt werden oder aber die genannten Zuweisungen durch eine Eingabe mittels der Eingabeschnittstelle 10 bestimmt werden. Damit werden die beiden Möglichkeiten abgedeckt, dass der Bediener die Kopplung selbst vornimmt und dann der Steuervorrichtung 8 mitteilt, damit diese sie in der Belegungstabelle 6a-c berücksichtigen kann oder aber der Bediener sich von der Steuervorrichtung 8 eine Zuweisung bestimmen lässt, diese sich ggf. anzeigen lässt und dann erst die dementsprechende Kopplung des zusätzlichen Anbaugeräts 1a-f vornimmt.

Bevorzugt ist ebenso, dass die Steuervorrichtung 8 dazu eingerichtet ist, Sequenzen auszuführen, wobei jeder Sequenz Anbaugeräte 1a-f zugeordnet sind und jede Sequenz landwirtschaftliche Prozessschritte durch zeitabhängige Leistungsverläufe 13a-d an den Gegenanschlüssen der der Sequenz zugeordneten Anbaugeräte 1a-f definiert, wobei der aktiven Belegungstabelle 9 diejenigen Anbaugerätemodelle 7a-f zugeordnet sind, welche die der Sequenz zugeordneten Anbaugeräte 1a-d definieren.

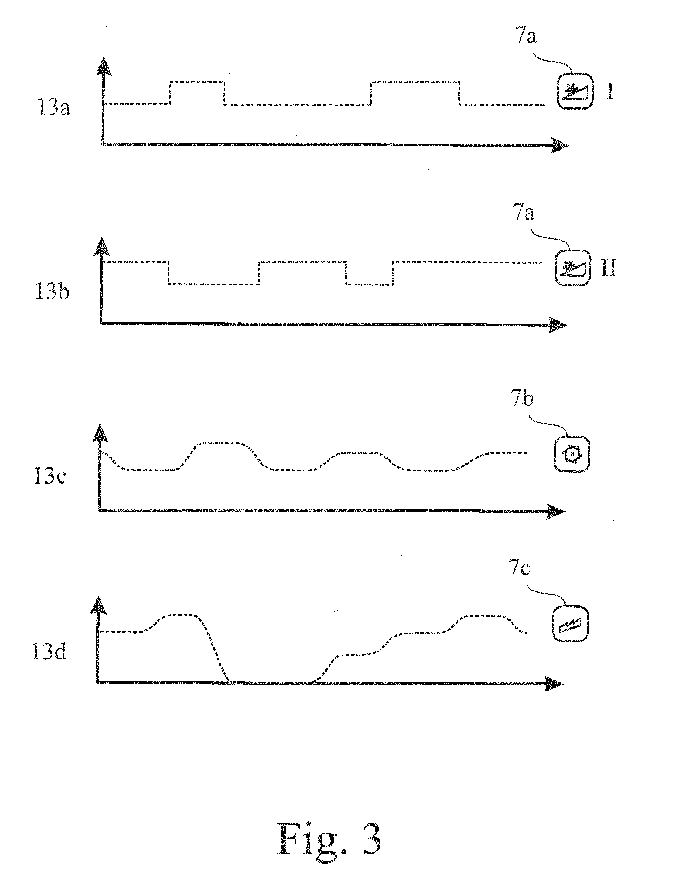

Die Fig. 3 zeigt eine Sequenz mit vier zeitabhängigen Leistungsverläufen 13a-d und den Gegenanschlüssen der drei Anbaugeräte 1a-c, welche den zeitabhängigen Leistungsverläufen 13a-d zugeordnet sind. Bei einer Sequenz kommt es darauf an, dass die entsprechenden Gegenanschlüsse der Anbaugeräte 1a-c gemäß dem jeweiligen Leistungsverlauf 13a-d angesteuert werden. Welche Maschinenanschlüsse 4a-j der Arbeitsmaschine 2 dies genau betrifft, ist für das Ergebnis der Sequenz grundsätzlich nicht entscheidend, solange die Gegenanschlüsse des richtigen Anbaugeräts 1a-c an diese Maschinenanschlüsse 4a-j gekoppelt sind. Diese für die Ausführung durch die Steuervorrichtung 8 aber notwendige Information liefert die Belegungstabelle 6a-c. Sie stellt sicher, dass die Leistungsverläufe 13a-d an den entsprechenden Maschinenanschlüssen 4a-j erzeugt werden. Bei einer aktiven Belegungstabelle 9 gemäß der Belegungstabelle 6c aus der Fig. 2 würde also der Leistungsverlauf 13a an dem Maschinenanschluss 4a, der Leistungsverlauf 13b an dem Maschinenanschluss 4g, der Leistungsverlauf 13c an dem Maschinenanschluss 4c und der Leistungsverlauf 13d an dem Maschinenanschluss 4e erzeugt werden.

Wenn nun eine andere Kopplung von Gegenanschlüssen und Maschinenanschlüssen 4a-j der landwirtschaftlichen Arbeitsmaschine 2 hergestellt wird, etwa durch ein Umkoppeln eines Anbaugeräts 1a-j einer Sequenz, so muss die Sequenz als solche mit ihren zeitabhängigen Leistungsverläufen 13a-d nicht angepasst werden, sondern es kann einfach die Belegungstabelle 6c modifiziert oder durch diejenige ausgetauscht werden, die der neuen Koppelsituation entspricht. Auf diese Weise ist es möglich, die Sequenzen von der physikalischen Belegung der Maschinenanschlüsse 4a-j zu trennen, was die Verwaltung und Flexibilität sowohl der Belegungstabellen 6a-c als auch der Sequenzen deutlich vereinfacht.

Als bevorzugte Weiterbildung ist vorgesehen, dass die Steuervorrichtung 8 dazu eingerichtet ist, bei Auswahl einer auszuführenden Sequenz durch eine Eingabe mittels der Eingabeschnittstelle 10 zu prüfen, ob der aktiven Belegungstabelle 9 diejenigen Anbaugerätemodelle 7a-f zugeordnet sind, welche die der auszuführenden Sequenz zugeordneten Anbaugeräte 1a-f definieren. Dadurch bietet die Steuervorrichtung 8 also einen Plausibilitätscheck um zu prüfen, ob überhaupt die aktive Belegungstabelle 9 ein Ausführen der Sequenz erlaubt.

Für den Fall, dass die aktive Belegungstabelle 9 in diesem Sinne für die Ausführung der Sequenz geeignet ist, ist bevorzugt vorgesehen, dass die Steuervorrichtung 8 dazu eingerichtet ist, bei Auswahl einer auszuführenden Sequenz durch eine Eingabe mittels der Eingabeschnittstelle 10 eine neue Belegungstabelle zu erstellen, welcher die Anbaugerätemodelle 7a-f zugeordnet sind, welche die der auszuführenden Sequenz zugeordneten Anbaugeräte 1a-f definieren. Die Steuervorrichtung 8 sorgt also proaktiv dafür, dass wenn das Ausführen einer Sequenz gewünscht wird, eine dementsprechende Belegungstabelle - sofern noch nicht vorhanden - erstellt wird.

Dabei ist gemäß einer ersten bevorzugten Alternative der Weiterentwicklung vorgesehen, dass die Steuervorrichtung 8 dazu eingerichtet ist, eine Zuweisung von Maschinenanschlüssen 4a-j der landwirtschaftlichen Arbeitsmaschine 2 an die Gegenanschlüsse der der neuen Belegungstabelle zugeordneten Anbaugerätemodelle 7a-f algorithmisch zu ermitteln. Das bedeutet, dass die Steuervorrichtung 8 diese Zuweisung gemäß einer internen Vorschrift erzeugt, welche grundsätzlich beliebig sein kann. Hier kommt sowohl ein pseudo-zufälliger Algorithmus in Betracht wie auch einer, bei dem alle möglichen Zuweisungen durchgespielt und gemäß einer Metrik ausgewählt werden. Dann kann der Bediener dazu aufgefordert werden, die Kopplung gemäß der damit neu entstandenen Belegungstabelle vorzunehmen.

Alternativ oder zusätzlich zu dieser Weiterentwicklung kann vorgesehen sein, eine Zuweisung von Maschinenanschlüssen 4a-i der landwirtschaftlichen Arbeitsmaschine 2 an die Gegenanschlüsse der der neuen Belegungstabelle zugeordneten Anbaugerätemodelle 7a-f mittels der Eingabeschnittstelle 10 zu empfangen. Es kann also für diese neue Belegungstabelle auch der Bediener mittels der Eingabeschnittstelle 10 eine Zuweisung vorgeben. Als Mischform der beiden letztgenannten Varianten ist es auch möglich, dass zumindest einige Zuweisungen vom Bediener auf diese Weise vorgegeben werden und die weiteren Zuweisungen wie beschrieben algorithmisch von der Steuervorrichtung 8 ermittelt werden.

Schließlich ist es auch bevorzugt, dass die Steuervorrichtung 8 dazu eingerichtet ist, bei Auswahl einer auszuführenden Sequenz durch eine Eingabe mittels der Eingabeschnittstelle 10 eine Belegungstabelle 6a.c aus dem Datenspeicher 5 zu ermitteln, welcher diejenigen Anbaugerätemodelle 7a-f zugeordnet sind, welche die der auszuführenden Sequenz zugeordneten Anbaugeräte 1a-f definieren. Es wird also geprüft, ob für eine bestimmte gewünschte Sequenz eine passende Belegungstabelle 6a-c im Datenspeicher 5 bereits vorhanden ist. In diesem Anwendungsfall weiß der Bediener also, welche Sequenz er mit welchen Anbaugeräten 1a-f ausführen will, hat aber die entsprechende Belegungstabelle 6a-c noch nicht selbst identifiziert.

Wenn dann, wie weiter bevorzugt, die ermittelte Belegungstabelle 6a-c an eine Mobilvorrichtung 11 durch die Steuervorrichtung 8 übertragen wird, insbesondere über eine drahtlose Kommunikationsschnittstelle 12, kann auf diesem Weg dem Bediener die für diese Sequenz bereits abgespeicherte Belegungstabelle 6a-c auch dann angezeigt werden, wenn er sich in der Umgebung der Maschinenanschlüsse 4a-j - wo die Ankopplung der Anbaugeräte 1a-f ja tatsächlich erfolgt - der Arbeitsmaschine 2 und nicht an einem Bedienerplatz der Arbeitsmaschine 2 aufhält.

In der Praxis könnte dieser Ablauf auch so aussehen, dass der Bediener die gewünschte Sequenz gemäß der demnächst anstehenden Bearbeitung durch die landwirtschaftliche Arbeitsmaschine 2 eingibt und daraufhin ihm noch fern der landwirtschaftlichen Arbeitsmaschine 2 durch die Steuervorrichtung 8 eine Belegungstabelle 6a-c zur Verfügung gestellt wird, indem diese ihm auf seiner Mobilvorrichtung 11 angezeigt wird, woraufhin der Bediener die entsprechende Kopplung der Gegenanschlüsse der Anbaugeräte 1a-f zu den Maschinenanschlüssen 4a-j vornehmen kann. Später kann dann die genannte Sequenz gemäß dieser Belegungstabelle 6a-c durch die Steuervorrichtung 8 tatsächlich ausgeführt werden.

Bevorzugt ist ferner bei einem vorschlagsgemäßen Kontrollsystem vorgesehen, dass die landwirtschaftliche Arbeitsmaschine 2 dazu eingerichtet ist, mit einer Vielzahl von Anbaugeräten 1a-f mit Gegenanschlüssen dadurch dynamisch gekoppelt zu werden, dass die Gegenanschlüsse eines jeweiligen Anbaugeräts 1a-f mit jeweils einem Maschinenanschluss 4a-j der landwirtschaftlichen Arbeitsmaschine 2 verbunden werden.

Bevorzugt ist dabei zusätzlich den Maschinenanschlüssen 4a-j der landwirtschaftlichen Arbeitsmaschine 2 jeweils ein Repräsentationssymbol zugeordnet, welche Repräsentationssymbole bei einer Übertragung einer Belegungstabelle 6a-c mit übertragen werden. Diese Repräsentationssymbole können auch etwa an den physikalischen Maschinenanschlüssen 4a-j selber wiedergegeben sein. Damit ist bei der Übertragung einer Belegungstabelle 6a-c etwa an eine Mobilvorrichtung 11 gewährleistet, dass die durch die Belegungstabelle 6a-c definierte Zuweisung von Gegenanschlüssen an Maschinenanschlüsse 4a-j auch auf eine Art und Weise dargestellt wird, die dem Bediener das Wiederfinden an den physikalischen Maschinenanschlüssen 4a-j erleichtert.

Vorschlagsgemäß ist auch eine landwirtschaftliche Arbeitsmaschine 2 mit Anbaugeräten 1a-f und einem vorschlagsgemäßen Kontrollsystem.

Schließlich wird ein Verfahren zum Erzeugen eines Belegungsschemas für ein vorschlagsgemäßes Kontrollsystem vorgestellt, welches Belegungsschema jedem Gegenanschluss der Anbaugeräte 1a-f einer Anbaugeräteliste einen Maschinenanschluss 4a-f der landwirtschaftlichen Arbeitsmaschine 2 zuweist. Dieses vorschlagsgemäße Verfahren umfasst das Empfangen einer Anbaugeräteliste und einer Liste von Kombinationen der Anbaugeräte 1a-f der Anbaugeräte-liste, wobei jede Kombination jeweils an die landwirtschaftliche Arbeitsmaschine 2 zu koppelnde Anbaugeräte 1a-f bestimmt.

Das Verfahren umfasst ferner das Erstellen des Belegungsschemas, wobei innerhalb jeder Kombination der Liste jeder Maschinenanschluss 4a-j der landwirtschaftlichen Arbeitsmaschine 2 höchstens einem Gegenanschluss zugewiesen ist und jedem Gegenanschluss der Anbaugeräte 1a-f der Anbaugeräteliste stets derselbe Maschinenanschluss 4a-j zugewiesen ist. Mit anderen Worten ist gewährleistet, dass es innerhalb einer Kombination von Anbaugeräten 1a-f keinen Konflikt um die Maschinenanschlüsse 4a-j gibt und jedem Gegenanschluss in allen Kombinationen, in welcher das entsprechende Anbaugerät 1a-f vorkommt, stets derselbe Maschinenanschluss 4a-f zugewiesen ist. Der einem Gegenanschlusses zugewiesene Maschinenanschluss 4a-j ist also immer gleich, was natürlich die praktische Verwaltung und Kopplung der Anbaugeräte 1a-f immens vereinfacht.

Schließlich umfasst das Verfahren das Erzeugen eines Belegungstabelle 6a-c für jede Kombination der Liste.

Dabei ist grundsätzlich nicht gewährleistet, dass ein solches Belegungsschema überhaupt existiert. Bei einer ausreichend großen Zahl von Anbaugeräten und Kombinationen könnte ein solches Belegungsschema nicht existieren.

Es kann aber sowohl diese Frage geklärt als auch im Falle eines bejahenden Ergebnisses ein solches Belegungsschema erstellt werden durch ein simples Iterieren über alle möglichen Kombinationen, was heutzutage auch ein Rechensystem in der Art eines Smartphone in überschaubarer Zeit leisten kann.

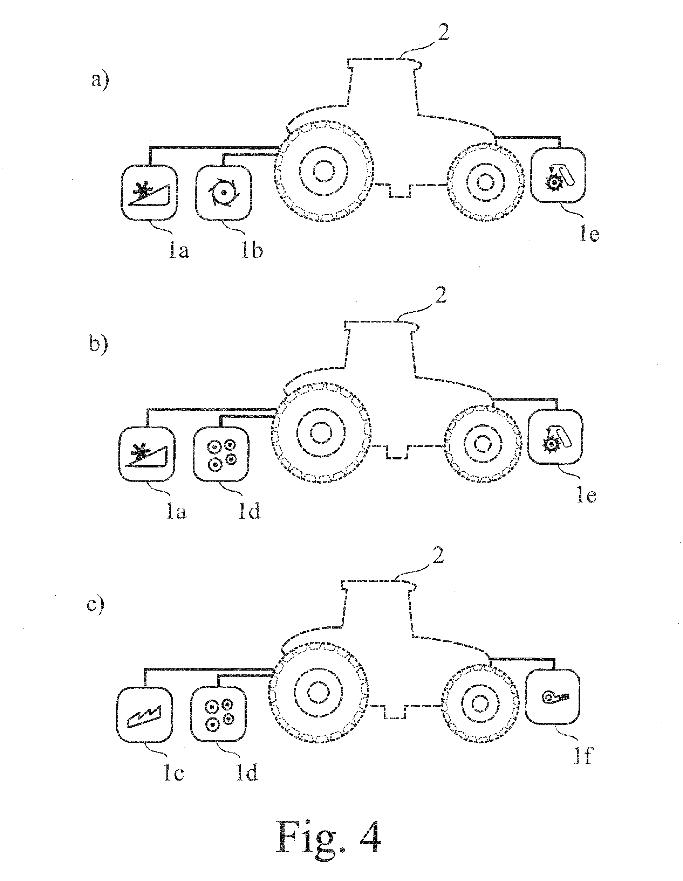

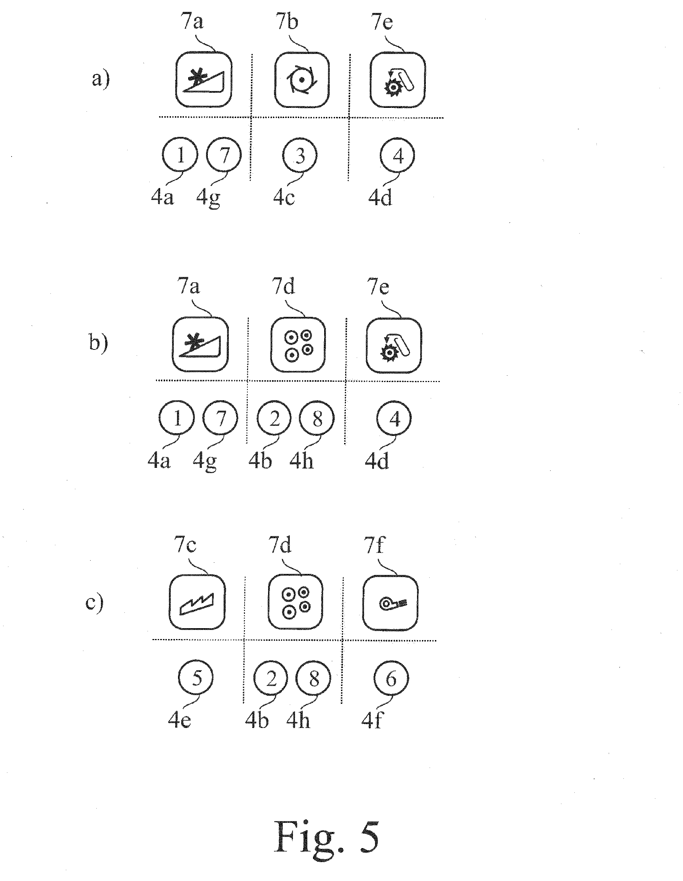

Die Fig. 4a-c und 5a-c zeigen ein stark vereinfachtes Beispiel zur Illustration. In diesem Beispiel besteht die Anbaugeräteliste aus den sechs Anbaugeräten 1a-f. Die Liste der Kombinationen der Anbaugeräte besteht aus drei Kombinationen, welche jeweils in den Fig. 4a, 4b und 4c dargestellt sind. Es wird nun ein Belegungsschema erzeugt, bei welchem dem ersten Anbaugerätemodell 7a die Maschinenanschlüsse 4a,g, dem zweiten Anbaugerätemodell 7b der Maschinenanschluss 4c, dem dritten Anbaugerätemodell 7c der Maschinenanschluss 4e, dem vierten Anbaugerätemodell 7d die Maschinenanschlüsse 4b,h, dem fünften Anbaugerätemodell 7e der Maschinenanschluss 4d und dem sechsten Anbaugerätemodell 7f der Maschinenanschluss 4f zugewiesen ist.

Aus diesem Belegungsschema ergibt sich für jede der drei Kombinationen eine Belegungstabelle, welche jeweils in den Fig. 5a, 5b und 5c wiedergegeben sind.

## Patentansprüche

1. Kontrollsystem für Anbaugeräte (1a-f) einer landwirtschaftlichen Arbeitsmaschine (2) mit einer Geräteschnittstelle (3) zur Ansteuerung von Maschinenanschlüssen (4a-j) der landwirtschaftlichen Arbeitsmaschine (2), einem Datenspeicher (5) mit Belegungstabellen (6a-c), wobei jeder Belegungstabelle (6a-c) ein oder mehrere Anbaugerätemodelle (7a-f) zugeordnet sind, wobei jedes Anbaugerätemodell (7a-f) ein Anbaugerät (1a-f) mit Gegenanschlüssen definiert und jede Belegungstabelle (6a-c) eine Zuweisung von Maschinenanschlüssen (4a-j) der landwirtschaftlichen Arbeitsmaschine (2) an die Gegenanschlüsse der der Belegungstabelle (6a-c) zugeordneten Anbaugerätemodelle (7a-f) umfasst, einer Steuervorrichtung (8), welche dazu eingerichtet ist, die Maschinenanschlüsse (4a-j) der landwirtschaftlichen Arbeitsmaschine (2) gemäß einer aktiven Belegungstabelle (9) des Datenspeichers (5) anzusteuern und einer Eingabeschnittstelle (10) zur Bearbeitung der Belegungstabellen (6a-c) des Datenspeichers (5) und zum Bestimmen der aktiven Belegungstabelle (9).

2. Kontrollsystem nach Anspruch 1, **dadurch gekennzeichnet, dass** die Steuervorrichtung (8) dazu eingerichtet ist, eine, vorzugsweise aktive, Belegungstabelle (9) an eine Mobilvorrichtung (11), insbesondere über eine drahtlose Kommunikationsschnittstelle (12), vorzugsweise, bei Bestimmen der aktiven Belegungstabelle (9), zu übertragen.

3. Kontrollsystem nach Anspruch 1 oder 2, **dadurch gekennzeichnet, dass** die Maschinenanschlüsse (4a-j) Hydraulikanschlüsse umfassen, vorzugsweise Hydraulikanschlüsse sind, und/oder Pneumatikanschlüsse umfassen und/oder Elektroanschlüsse umfassen und/oder Kommunikationsanschlüsse umfassen.

4. Kontrollsystem nach einem der Ansprüche 1 bis 3, **dadurch gekennzeichnet, dass** die Steuervorrichtung (8) dazu eingerichtet ist, bei Eingabe einer Kombination von Anbaugeräten (1a-f) eine Belegungstabelle (6a-c) aus dem Datenspeicher (5) zu ermitteln, welcher diejenigen Anbaugerätemodelle (7a-f) zugeordnet sind, die die Anbaugeräte (1a-f) der Kombination definieren, vorzugsweise, die ermittelte Belegungstabelle (6a-c) als aktive Belegungstabelle (9) zu bestimmen.

5. Kontrollsystem nach einem der Ansprüche 1 bis 4, **dadurch gekennzeichnet, dass** die Steuervorrichtung (8) dazu eingerichtet ist, bei Eingabe eines zusätzlichen Anbaugeräts (1a-f) als Ergänzung zu einer Basis-Belegungstabelle zu prüfen, ob der Basis-Belegungstabelle Zuweisungen von Maschinenanschlüssen (4a-j) der landwirtschaftlichen Arbeitsmaschine (2) an die Gegenanschlüsse desjenigen Anbaugerätemodells (7a-f) hinzugefügt werden können, welches das zusätzliche Anbaugerät (1a-f) definiert.

6. Kontrollsystem nach Anspruch 5, **dadurch gekennzeichnet, dass** die Steuervorrichtung (8) dazu eingerichtet ist, bei Eingabe eines zusätzlichen Anbaugeräts (1a-f) als Ergänzung zu einer Basis-Belegungstabelle zu prüfen, ob der Datenspeicher (5) eine Belegungstabelle (6a-c) umfasst, welcher die Anbaugerätemodelle (7a-f) der Basis-Belegungstabelle zugeordnet sind sowie ein Anbaugerätemodell (7a-f) zugeordnet ist, welches das zusätzliche Anbaugerät (1a-f) definiert, vorzugsweise, diese vom Datenspeicher (5) umfasste Belegungstabelle (6a-c) als aktive Belegungstabelle (9) zu bestimmen.

7. Kontrollsystem nach Anspruch 5 oder 6, **dadurch gekennzeichnet, dass** die Steuervorrichtung (8) dazu eingerichtet ist, bei Eingabe eines zusätzlichen Anbaugeräts (1a-f) als Ergänzung zu einer Basis-Belegungstabelle, der Basis-Belegungstabelle ein zusätzliches Anbaugerätemodell (7a-f) zuzuordnen, welches das zusätzliche Anbaugerät definiert, sowie Zuweisungen von Maschinenanschlüssen (4a-j) der landwirtschaftlichen Arbeitsmaschine (2) an die Gegenanschlüsse dieses zusätzlichen Anbaugerätemodells (7a-f) hinzuzufügen.

8. Kontrollsystem nach Anspruch 7, **dadurch gekennzeichnet, dass** die Zuweisungen der Maschinenanschlüsse (4a-j) der landwirtschaftlichen Arbeitsmaschine (2) an die Gegenanschlüsse dieses zusätzlichen Anbaugerätemodells (1a-f) von der Steuervorrichtung (8) bestimmt werden und/oder durch eine Eingabe mittels der Eingabeschnittstelle (10) bestimmt werden.

9. Kontrollsystem nach einem der Ansprüche 1 bis 8, **dadurch gekennzeichnet, dass** die Steuervorrichtung (8) dazu eingerichtet ist, Sequenzen auszuführen, wobei jeder Sequenz Anbaugeräte (1a-f) zugeordnet sind und jede Sequenz landwirtschaftliche Prozessschritte durch zeitabhängige Leistungsverläufe (13a-d) an den Gegenanschlüssen der der Sequenz zugeordneten Anbaugeräte (1a-f) definiert und wobei der aktiven Belegungstabelle (9) diejenigen Anbaugerätemodelle (7a-f) zugeordnet sind, welche die der Sequenz zugeordneten Anbaugeräte (1a-f) definieren.

10. Kontrollsystem nach Anspruch 9, **dadurch gekennzeichnet, dass** die Steuervorrichtung (8) dazu eingerichtet ist, bei Auswahl einer auszuführenden Sequenz durch eine Eingabe mittels der Eingabeschnittstelle (10) zu prüfen, ob der aktiven Belegungstabelle (9) diejenigen Anbaugerätemodelle (7a-f) zugeordnet sind, welche die der auszuführenden Sequenz zugeordneten Anbaugeräte (1a-f) definieren.

11. Kontrollsystem nach Anspruch 9 oder 10, **dadurch gekennzeichnet, dass** die Steuervorrichtung (8) dazu eingerichtet ist, bei Auswahl einer auszuführenden Sequenz durch eine Eingabe mittels der Eingabeschnittstelle (10) eine neue Belegungstabelle zu erstellen, welcher die Anbaugerätemodelle (7a-f) zugeordnet sind, welche die der auszuführenden Sequenz zugeordneten Anbaugeräte (1a-f) definieren, vorzugsweise, wobei die Steuervorrichtung (8) dazu eingerichtet ist, eine Zuweisung von Maschinenanschlüssen (4a-j) der landwirtschaftlichen Arbeitsmaschine (2) an die Gegenanschlüsse der der neuen Belegungstabelle zugeordneten Anbaugerätemodelle (7a-f) algorithmisch zu ermitteln und/oder eine Zuweisung von Maschinenanschlüssen (4a-j) der landwirtschaftlichen Arbeitsmaschine (2) an die Gegenanschlüsse der der neuen Belegungstabelle zugeordneten Anbaugerätemodelle (7a-f) mittels der Eingabeschnittstelle (10) zu empfangen.

12. Kontrollsystem nach einem der Ansprüche 9 bis 11, **dadurch gekennzeichnet, dass** die Steuervorrichtung (8) dazu eingerichtet ist, bei Auswahl einer auszuführenden Sequenz durch eine Eingabe mittels der Eingabeschnittstelle (10) eine Belegungstabelle (6a-c) aus dem Datenspeicher (5) zu ermitteln, welcher diejenigen Anbaugerätemodelle (7a-f) zugeordnet sind, welche die der auszuführenden Sequenz zugeordneten Anbaugeräte (1a-f) definieren, vorzugsweise, die ermittelte Belegungstabelle (6a-c) an eine Mobilvorrichtung (11), insbesondere über eine drahtlose Kommunikationsschnittstelle (12) zu übertragen.

13. Kontrollsystem nach einem der Ansprüche 1 bis 12, **dadurch gekennzeichnet, dass** die landwirtschaftliche Arbeitsmaschine (2) dazu eingerichtet ist, mit einer Vielzahl von Anbaugeräten (1a-f) mit Gegenanschlüssen dadurch dynamisch gekoppelt zu werden, dass die Gegenanschlüsse eines jeweiligen Anbaugeräts (1a-f) mit jeweils einem Maschinenanschluss (4a-j) der landwirtschaftlichen Arbeitsmaschine (2) verbunden werden, vorzugsweise, dass den Maschinenanschlüssen (4a-j) der landwirtschaftlichen Arbeitsmaschine (2) jeweils ein Repräsentationssymbol zugeordnet ist, welche Repräsentationssymbole bei einer Übertragung einer Belegungstabelle (6a-c) mit übertragen werden.

14. Landwirtschaftliche Arbeitsmaschine (2) mit Anbaugeräten (4a-f) und einem Kontrollsystem nach einem der Ansprüche 1 bis 13.

15. Verfahren zum Erzeugen eines Belegungsschemas für ein Kontrollsystem nach einem der Ansprüche 1 bis 13, welches Belegungsschema jedem Gegenanschluss der Anbaugeräte (1a-f) einer Anbaugeräteliste einen Maschinenanschluss (4a-f) der landwirtschaftlichen Arbeitsmaschine (2) zuweist, umfassend:
- Empfangen einer Anbaugeräteliste und einer Liste von Kombinationen der Anbaugeräte (1a-f) der Anbaugeräteliste, wobei jede Kombination jeweils an die landwirtschaftliche Arbeitsmaschine (2) zu koppelnde Anbaugeräte (1a-f) bestimmt,
- Erstellen des Belegungsschemas, wobei innerhalb jeder Kombination der Liste jeder Maschinenanschluss (4a-f) der landwirtschaftlichen Arbeitsmaschine (2) höchstens einem Gegenanschluss zugewiesen ist und jedem Gegenanschluss der Anbaugeräte (1a-f) der Anbaugeräteliste stets derselbe Maschinenanschluss (4a-f) zugewiesen ist und
- Erzeugen einer Belegungstabelle (6a-c) für jede Kombination der Liste.
